# EUROPÄISCHE PATENTSCHRIFT

(11) **EP 0 535 265 B1**
(45) Veröffentlichungstag und Bekanntmachung des Hinweises auf die Patenterteilung: **18.03.1998**
(21) Anmeldenummer: 91116726.0
(22) Anmeldetag: 30.09.1991
(51) Int. Cl.: G06F 9/445

(54) **Verfahren zur Erstellung einer ablauffähigen Konfiguration eines in einen Systemspeicherbereich eines Prozessorsystems ladbaren Systemprogramms**
Method to create an executable configuration of a system program loadable in a system memory range of a processor system
Méthode pour créer une configuration exécutable d'un logiciel de système chargeable dans un champ de mémoire d'un système processeur

(43) Veröffentlichungstag der Anmeldung: 07.04.1993
(73) Patentinhaber: SIEMENS AKTIENGESELLSCHAFT, 80333 München (DE)
(72) Erfinder: Gericke, Harald, W-4200 Oberhausen (DE); Köninger, Reinhard, Dipl.-Ing., W-4650 Gelsenkirchen (DE); Fischer, Peter, Dipl.-Inf., W-5810 Witten (DE)

(56) Entgegenhaltungen:
- EP-A- 0 195 823
- EP-A- 0 268 285
- EP-A- 0 335 812
- EP-A- 0 338 290
- PATENT ABSTRACTS OF JAPAN vol. 11, no. 37 (P-543)4. Februar 1987 & JP-A-61 206 049

## Beschreibung

Die Erfindung betrifft ein Verfahren zur Erstellung einer ablauffähigen Konfiguration eines in einen Systemspeicherbereich eines Prozessorsystems in Abhängigkeit von der verfügbaren Speicherkapazität im Systemspeicherbereich ganz oder teilweise ladbaren Systemprogramms.

Aus EP-A-0 195 823 ist ein Verfahren zum Laden von Systemprogrammen bekannt. Dabei wird nach Einspeichern einer Programmladesequenz (Monitor Programm) die Einspeicherung einer Anzahl von Programmsequenzen veranlaßt, wobei die Anzahl von der verfügbaren Speicherkapazität abhängig ist.

Um in programmgesteuerten Verarbeitungseinrichtungen einen möglichst hohen Grad an funktionaler Flexibilität zu erreichen, wird die Software, d. h. das von einem Prozessorsystem der programmgesteuerten Verarbeitungseinrichtung auszuführende Systemprogramm, nicht unveränderlich in Festwertspeicherbausteine einprogrammiert, sondern jedesmal beim Einschalten der programmgesteuerten Verarbeitungseinrichtung von einem externen Speichermedium in einen mit Schreib-/Lese-Speicherbausteinen versehenen Systemspeicherbereich des Prozessorsystems geladen. Bei ladbaren Systemprogrammen lassen sich Programmänderungen und Ergänzungen ohne Eingriffe in die Hardware der programmgesteuerten Verarbeitungseinrichtung vornehmen. Vom Hersteller des Systemprogramms bzw. der programmgesteuerten Verarbeitungseinrichtung wird eine die Änderung oder Ergänzung enthaltende neue Version des Systemprogramms erstellt und z. B. auf einer Diskette hinterlegt, die dann dem Benutzer der programmgesteuerten Verarbeitungseinrichtung zur Verfügung gestellt wird. Beim Laden des Systemprogramms wird dann statt der bisherigen Version die neue Version des Systemprogramms in den Systemspeicher übertragen.

Soll der Funktionsumfang einer programmgesteuerten Verarbeitungseinrichtung erweitert werden, muß das Systemprogramm durch entsprechende Programmsequenzen ergänzt werden. Dies kann nun dazu führen, daß die im Systemspeicher für das Laden des Systemprogramms zur Verfügung stehende Speicherkapazität nicht mehr ausreicht, um eine neue - ergänzte - Version des Systemprogramms aufzunehmen.

Diejenigen Benutzer von programmgesteuerten Verarbeitungseinrichtungen, die auf die mit der neuen Version des Systemprogramms ausführbaren Funktionen Wert legen, müssen eine in der Regel kostenintensive Vergrößerung des Systemspeichers vornehmen lassen.

Jedoch kann es den Benutzern, die keinen Bedarf für zusätzliche Funktionen haben, oder denen der Kostenaufwand für einen Speicherausbau im Verhältnis zu den mit den zusätzlichen Funktionen erzielbaren Vorteilen nicht rentabel erscheint, nicht zugemutet werden, auch auf Verbesserungen und Korrekturen im Funktionsumfang ihres bisher verwendeten Systemprogramms zu verzichten, weil Änderungen im bisherigen Funktionsumfang nur noch in den, den Funktionsumfang erweiternden Versionen des Systemprogramms vorgenommen werden und der Speicherausbau in den programmgesteuerten Verarbeitungseinrichtungen der Benutzer zum Laden dieser neuen Versionen des Systemprogramms nicht ausreicht.

Die Hersteller von programmgesteuerten Verarbeitungseinrichtungen und ihrer Systemprogramme begegnen diesem Problem üblicherweise durch ein Bereitstellen und Betreuen mehrerer Systemprogrammvarianten für den gleichen Typ einer programmgesteuerten Verarbeitungseinrichtung in Abhängigkeit von der im Systemspeicher zur Verfügung stehenden Speicherkapazität.

Eine solche Bereitstellung und Betreuung von Systemprogrammvarianten hat zur Folge, daß bei jeder Änderung im Systemprogramm für alle von der Änderung betroffenen Systemprogrammvarianten jeweils eine neue Version erstellt werden muß. Für den Hersteller des Systemprogramms ist eine "Software-Pflege" unter diesen Bedingungen, insbesondere bei einer Vielzahl von zu betreuenden Systemprogrammvarianten, mit erheblichem Aufwand z. B. für die Erstellung, die Archivierung und für eine Variantenzuordnung, verbunden.

Die Aufgabe der vorliegenden Erfindung besteht darin, eine Variantenbildung bei ladbaren Systemprogrammen aufgrund unterschiedlicher Speicherkapazitäten von Systemspeichern vermeidbar zu machen.

Gelöst wird diese Aufgabe erfindungsgemäß durch die Merkmale des Patentanspruchs 1.

In seinem Kern besteht dieses Verfahrens darin, daß sich das Systemprogramm selbständig beim Laden in den Systemspeicher der programmgesteuerten Verarbeitungseinrichtung zu einer an die Speicherkapazität des Systemspeichers angepaßten Systemprogrammvariante ausbildet.

Der das Basisprogrammodul bildende Teil des Systemprogrammes stellt gewissermaßen eine Art Minimalkonfiguration dar, für die selbst die kleinstmögliche Speicherkapazität ausreicht. Für den Fall, daß nach dem Einspeichern des Basisprogrammoduls noch Speicherkapazität zur Verfügung steht, werden Programmsequenzen des Ergänzungsprogrammoduls in den Systemspeicher geladen. Als Schnittstelle zwischen Basisprogrammodul und Ergänzungsprogrammodul dient eine im Basisprogrammodul hinterlegte Sprungadressenliste mit den Systemspeicheradressen der Programmsequenzen des Ergänzungsprogrammoduls, über die ein programmtechnischer Zugriff - in der Regel ein "indirect call" - vom Basisprogrammodul auf die Programmsequenzen des Ergänzungsprogrammoduls ausführbar ist. Die Systemspeicheradressen von Programmsequenzen des Ergänzungsprogrammoduls, die beim Laden des Systemprogramms aufgrund fehlender Speicherkapazität nicht geladen werden konnten, werden von einer Programmladesequenz gelöscht bzw. abgeändert, so daß Zugriffe auf nicht vorhandene Programmsequenzen während einer Abarbeitung des Systemprogrammes nicht auftreten können.

Vorteilhafte Weiterbildungen der Erfindung sind in den Unteransprüchen angegeben.

Ein Ausführungsbeispiel der Erfindung wird im folgenden anhand der Zeichnung näher erläutert.

Dabei zeigen
- FIG 1: ein Blockschaltbild zur schematischen Darstellung einer Hardwarekonfiguration in einer programmgesteuerten Verarbeitungseinrichtung, und
- FIG 2: eine symbolisierte Darstellung der Systemspeicherbelegung bei zwei unterschiedlichen Speicherkapazitäten.

Das Ausführungsbeispiel geht von einer programmgesteuerten Kommunikationsanlage aus, deren Systemprogramm jeweils beim Einschalten der Kommunikationsanlage von einer Diskette in einen Systemspeicher geladen wird.

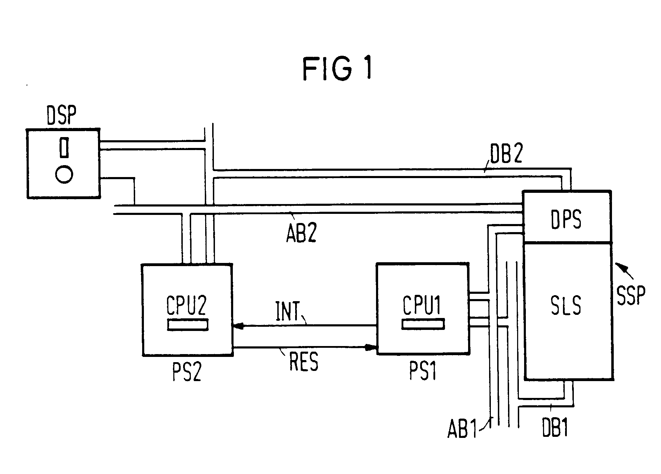

In FIG 1 ist eine zur Steuerung der Kommunikationsanlage dienende Hardware-Systemkonfiguration mit einem Prozessorsystem PS1 und mit einem weiteren Prozessorsystem PS2 schematisch dargestellt. Beide Prozessorsysteme PS1, PS2 weisen als verarbeitende Einrichtung jeweils einen Mikroprozessor CPU1, CPU2 auf. Ein dem Prozessorsystem PS1 zugeordneter Systemspeicher SSP ist über einen Adreßbus AB1 und einen Datenbus DB1 mit dem Prozessorsystem PS1 verbunden. Der Systemspeicher SSP besteht aus einer Vielzahl von Halbleiter-Speicherbausteinen, die frei adressierbare Speicherzellen für lesende und schreibende Zugriffe ("Random Access Memory: RAM") aufweisen. Ein Teil des Systemspeichers SSP ist als "Dual-Port-Speicher" ausgebildet. Dieser "Dual-Port-Speicher" DPS ist mit einem ersten Zugriffskanal an den Adreß- und Datenbus AB1, DB1 des Prozessorsystems PS1 und mit einem zweiten Zugriffskanal an den Adreß- und Datenbus AB2, DB2 des weiteren Prozessorsystems PS2 angeschlossen. Außerdem ist an den Adreß- und Datenbus AB2, DB2 des weiteren Prozessorsystems PS2 eine Diskettenspeichereinrichtung DSP angeschlossen.

Zum Laden eines Systemprogramms in den Systemspeicher SSP wird zunächst vom weiteren Prozessorsystem PS2 eine Programmladesequenz von einer in der Diskettenspeichereinrichtung DSP befindlichen Diskette gelesen und in den "Dual-Port-Speicher" DPS des Systemspeichers SSP übetragen. Der "Dual-Port-Speicher" DPS ist im Adreßraum des Mikroprozessors CPU1 so angeordnet, daß bei Eintreffen eines von dem weiteren Prozessorsystem PS2 erzeugten Rücksetzsignals RES der Mikroprozessor CPU1 des Prozessorsystems PS1 sofort die Abarbeitung der Programmladesequenz beginnen kann.

Während der Abarbeitung dieser Programmladesequenz werden vom Prozessorsystem PS1 an das weitere Prozessorsystem PS2 eine Vielzahl von "Interrupt-Signalen" INT gemeldet, die jeweils das Prozessorsystem PS2 dazu veranlassen, das auf der Diskette in der Diskettenspeichereinrichtung DSP hinterlegte Systemprogramm in Form von Programmblöcken nacheinander in den "Dual-Port-Speicher" DPS zu übertragen.

Dazu steht in dem "Dual-Port-Speicher" DPS ein Transfer-Speicherbereich zur Verfügung, in den jeweils ein Programmblock des Systemprogramms vom weiteren Prozessorsystem PS2 eingespeichert wird, der dann bei Abarbeitung der Programmladesequenz vom Mikroprozessor CPU1 in einen Schreib-/Lese-Speicherbereich SLS des Systemspeichers SSP übertragen wird. Mit einem "Interrupt-Signal" INT wird dann das weitere Prozessorsystem PS2 zur Übertragung des jeweils nächsten Programmblockes angeregt.

Das zu ladende Systemprogramm ist in ein Basisprogrammodul und ein Ergänzungsprogrammodul mit optional ladbaren Programmsequenzen unterteilt, deshalb wird zunächst das Basisprogrammodul in den Systemspeicher SSP geladen. Danach ermittelt die Programmladesequenz, welche Speicherkapazität im Systemspeicher SSP noch zur Verfügung steht. Dies erfolgt üblicherweise durch schreibende und nachfolgende lesende Zugriffe im Adreßbereich, wobei bei einer Übereinstimmung des gelesenen mit dem geschriebenen Werts davon ausgegangen werden kann, daß sich an der durch den Zugriff bezeichneten Adresse im Adreßbereich eine Speicherzelle befindet.

In Abhängigkeit davon, wieviel Speicherkapazität die Programmladesequenz im Systemspeicher als zur Verfügung stehend ermittelt hat, werden dem weiteren Prozessorsystem PS2 noch "Interrupt-Signale" INT zugeleitet, mit denen ein Übertragen weiterer Programmblöcke des Systemprogramms, genauer gesagt von Programmsequenzen des Ergänzungsprogrammoduls, veranlaßt wird. In der Regel werden soviele Programmsequenzen des Ergänzungsprogrammoduls geladen, bis die zur Speicherung des Systemprogramms verfügbare Speicherkapazität des Systemspeichers SSP ausgeschöpft ist.

Für den Fall, daß nicht alle Programmsequenzen des Ergänzungsprogrammoduls in den Systemspeicher SSP geladen werden konnten, wird von der Programmladesequenz eine Sprungadressenliste im Basisprogrammodul überarbeitet. Diese Sprungadressenliste, in der für jede Programmsequenz des Ergänzungsprogrammoduls die zugehörige Systemspeicheradresse hinterlegt ist, unter der die betreffende Programmsequenz bei ausreichender Speicherkapazität im Systemspeicher hinterlegt wird, dient gewissermaßen als programmtechnische Schnittstelle zwischen dem Basisprogrammodul und den Programmsequenzen des Ergänzungsprogrammoduls. Eine Abarbeitung von Programmsequenzen des Ergänzungsprogrammoduls ist nur über einen indirekten Sprung, insbesondere einem "indirect call", auf die in der Sprungadressenliste hinterlegten Systemspeicheradressen möglich ist. Von der Programmladesequenz werden die Systemspeicheradressen von nicht geladenen Programmsequenzen in die Adresse einer zur Erzeugung einer Fehlmeldung dienenden Programmsequenz umgeändert. Diese Programmsequenz befindet sich im Basisprogrammodul.

Im Basisprogrammodul werden sinnvollerweise die für die wesentlichen Funktionen der programmgesteuerten Verarbeitungseinrichtung nötigen Programmsequenzen hinterlegt, in das Ergänzungsprogrammodul lassen sich die zur Implementierung zusätzlicher Funktionen dienenden Programmsequenzen auslagern. In einer Kommunikationsanlage sind z. B. die Programmsequenzen zur Implementierung von Leistungsmerkmalen, die für die wesentlichen Grundfunktionen einer Kommunikationsanlage unbedeutend sind, im Ergänzungsprogrammodul hinterlegt.

Wird bei Betrieb der Kommunikationsanlage ein solches Leistungsmerkmal aktiviert, erfolgt lediglich eine Fehlmeldung, die das Nichtvorhandensein der betreffenden Programmsequenz anzeigt, und die Aktivierung des Leistungsmerkmals zurückweist.

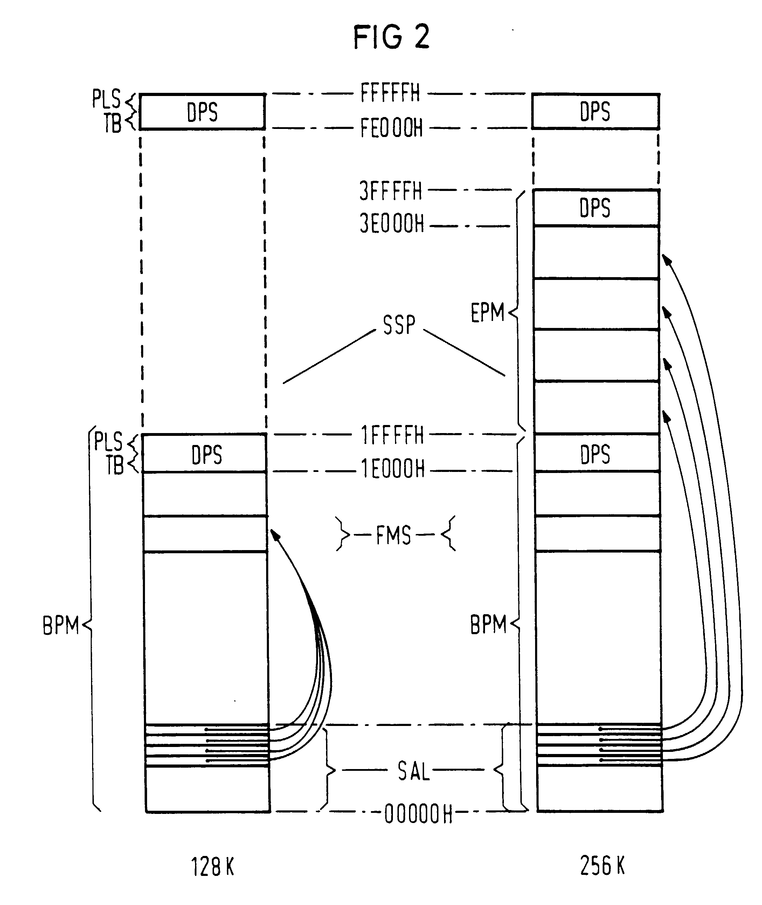

In FIG 2 ist jeweils eine Speicherbelegung für einen Systemspeicher SSP mit 128 KByte (linke Seite der FIGUR) und 256 KByte Speicherkapazität (rechte Seite der FIGUR) dargestellt. Unabhängig davon, ob der Systemspeicher SSP 128 KByte oder 256 KByte Speicherkapazität aufweist, ist der "Dual Port-Speicher" DPS - mit einer Speicherkapazität von 8 KByte - am Ende der ersten 128 KByte im Adreßbereich (1EOOOH bis 1FFFFH) und am Ende des gesamten Adreßbereichs (FEOOOH bis FFFFFH) zu erreichen.

Da dem weiteren Prozessorsystem PS2 beim Laden des Systemprogramms nicht bekannt ist, wie groß der Speicherausbau im Systemspeicher SSP tatsächlich ist, wird zunächst sicherheitshalber vom kleinstmöglichen Speicherausbau ausgegangen. Im vorliegenden Fall ist dies ein Speicherausbau von 128 KByte. Die Programmladesequenz PLS wird vom weiteren Prozessorsystem PS2 in die oberen vier KByte (1FOOOH bis 1FFFFH) dieses Speicherbereichs übertragen. An dieser Stelle befindet sich - wie bereits erwähnt - der "Dual Port-Speicher" DPS, der zudem auch am Ende des gesamten Adreßbereichs erreichbar ist und damit auch die Rücksetzadresse des Mikroprozessors CPU1 beinhaltet. Der "Dual-Port-Speicher" DPS ist organisatorisch in zwei 4 KByte-Speicherbereiche unterteilt, von denen der adreßmäßig höhergelegene Bereich zur Aufnahme der Programmladesequenz PLS und der adreßmäßig niedrigere Bereich als Transfer Speicherbereich TB zur blockweisen Übertragung des Systemprogramms dient.

Nachdem das Basisprogrammodul BPM von der Programmladesequenz PLS in Zusammenarbeit mit dem weiteren Prozessorsystem PS2 ordnungsgemäß im Systemspeicher SSP hinterlegt wurde, ermittelt die Programmladesequenz PLS, ob die Speicherkapazität im Systemspeicher SSP eine zur Hinterlegung der Programmsequenzen des Erweiterungsprogrammoduls EPM erforderliche Speicherkapazität aufweist. Ist dies der Fall - wie bei dem Speicherausbau mit 256 KByte (rechte Hälfte der FIGUR -, dann werden von der Programmladesequenz PLS die Programmsequenzen des Erweiterungsprogrammoduls EPM beginnend mit der Adresse "2000H" in den Systemspeicher SSP gespeichert. Liegt jedoch nur ein Speicherausbau von 128 KByte vor, der ein Laden von Programmsequenzen des Erweiterungsprogrammoduls EPM nicht erlaubt, so löscht die Programmladesequenz PLS in der Sprungadressenliste SAL die auf die Programmsequenzen des Erweiterungsprogrammoduls gerichteten Adressen und vermerkt an Stelle der bisherigen Adressen jeweils die Adresse einer Fehlmeldungprogrammsequenz FMS im Basisprogrammodul BPM.

## Patentansprüche

1. Verfahren zur Erstellung einer ablauffähigen Konfiguration eines in einem Systemspeicherbereich eines Prozessorsystems (PS1) in Abhängigkeit einer verfügbaren Speicherkapazität im Systemspeicherbereich ganz oder teilweise ladbaren Systemprogramms, wobei nach Einspeichern einer Programmladesequenz in den Systemspeicherbereich deren Abarbeitung eingeleitet wird, bei der die verfügbare Speicherkapazität ermittelt und eine Einspeicherung des Systemprogrammes in Abhängigkeit der verfügbaren Speicherkapazität veranlaßt wird,
**dadurch gekennzeichnet,**
daß das Systemprogramm in ein Basisprogrammodul (BPM), für das eine ausreichende Speicherkapazität im Systemspeicherbereich sichergestellt ist und wenigstens in ein Ergänzungsprogrammodul (EPM) unterteilt ist, und daß das Basisprogrammodul (BPM) eine Sprungadressenliste (SAL) mit Systemspeicheradressen von dem Ergänzungsprogrammodul (EPM) zugehörigen Programmsequenzen aufweist, wobei bei der Abarbeitung der Programmladesequenz (PLS)
- die Einspeicherung des Basisprogrammoduls (BPM) in den Systemspeicherbereich, sowie in Abhängigkeit der ermittelten Speicherkapazität ein Einspeichern von Programmsequenzen des Ergänzungsprogrammoduls (EPM) in den Systemspeicherbereich veranlaßt wird, und
- in der Sprungadressenliste (SAL) die Systemspeicheradressen von aufgrund fehlender Speicherkapazität nicht geladener Programmsequenzen des Ergänzungsprogrammmoduls (EPM) jeweils durch die Adresse einer, eine Fehlermeldung erzeugenden Programmsequenz (FMS) des Basisprogrammoduls (BPM) ersetzt wird.

2. Verfahren nach Anspruch 1,
**dadurch gekennzeichnet**,
daß die Programmladesequenz (PLS) von einem weiteren Prozessorsystem (PS2) in einen "Dual-Port-Speicher" (DPS) des Systemspeicherbereichs hinterlegt wird und daß bei Ausführung der Programmladesequenz an das weitere Prozessorsystem (PS2) gerichtete Meldungen (INT) erzeugt werden, die das weitere Prozessorsystem (PS2) dazu veranlassen, in den "Dual-Port-Speicher" (DPS) nacheinander jeweils einen Teil des Systemprogramms zu hinterlegen, der dann von der Programmladesequenz (PLS) an die für eine Ablauffähigkeit des Systemprogramms erforderliche Adresse im Systemspeicherbereich übertragen wird.

3. Verfahren nach Anspruch 1 oder 2,
**dadurch gekennzeichnet,**
daß die Prozessorsysteme (PS1, PS2) zur Steuerung einer Kommunikationsanlage vorgesehen sind und die Programmsequenzen des Ergänzungsprogrammoduls (EPM) zur Implementierung jeweils eines Leistungsmerkmals der Kommunikationsanlage ausgebildet sind.

## Claims

1. Method for producing an executable configuration of a system program which can be loaded entirely or partially in a system memory area of a processor system (PS1) as a function of an available memory capacity in the system memory area, whereby, after storing a program loading sequence in the system memory area, its processing is initiated, during which the available memory capacity is determined and the storage of the system program is effected as a function of the available memory capacity, characterized in that the system program is split into a basic program module (BPM) (for which sufficient memory capacity in the system memory area is ensured) and at least into a supplementary program module (EPM), and in that the basic program module (BPM) has a jump address list (SAL) with system memory addresses of program sequences associated with the supplementary program module (EPM), whereby, during the processing of the program loading sequence (PLS),
- the storage of the basic program module (BPM) in the system memory area is effected, and storage of program sequences in the supplementary program module (EPM) in the system memory area is effected as a function of the determined memory capacity, and
- in the jump address list (SAL), the system memory addresses of program sequences in the supplementary program module (EPM) which have not been loaded because of lack of memory capacity are in each case replaced by the address of a program sequence (FMS) (which produces an error message) in the basic program module (BPM).

2. Method according to Claim 1, characterized in that the program loading sequence (PLS) of a further processor system (PS2) is stored in a "dual port memory" (DPS) of the system memory area, and in that, when the program loading sequence is executed, messages (INT) are produced which are directed to the further processor system (PS2) and cause the further processor system (PS2) in each case to store a part of the system program, successively, in the "dual port memory" (DPS) and this part of the system program is then transmitted from the program loading sequence (PLS) to the address in the system memory area required for it to be possible to execute the system program.

3. Method according to Claim 1 or 2, characterized in that the processor systems (PS1, PS2) are provided for controlling a communications system, and the program sequences in the supplementary program module (EPM) are each designed to implement a performance feature of the communications system.

## Revendications

1. Procédé pour obtenir une configuration exécutable d'un programme de système pouvant être chargé totalement ou partiellement dans une zone de mémoire de système d'un système (PS1) processeur en fonction d'une capacité de mémoire disponible dans la zone de mémoire du système ; dans lequel, après entrée d'une séquence de chargement de programme dans la zone de mémoire du système, il est initié le traitement de cette séquence, lors duquel la capacité de mémoire disponible est déterminée et une entrée du programme de système est provoquée en fonction de la capacité de mémoire disponible, caractérisé en ce que le programme de système est subdivisé en un module (BPM) de programme de base, pour lequel une capacité de mémoire suffisante est assurée dans la zone de mémoire du système, et au moins en un module (EPM) de programme de complément, et en ce que le module (BPM) de programme de base comporte une liste (SAL) d'adresses de transfert ayant des adresses de mémoire du système de séquences de programme associées au module (EPM) de programme de complément ; lors du traitement de la séquence (PLS) de chargement de programme
- l'entrée du module (BPM) de programme de base dans la zone de mémoire du système, ainsi que, en fonction de la capacité de mémoire déterminée, une entrée de séquence de programme du module (EPM) de programme de complément étant provoquée dans la zone de mémoire du système, et
- dans la liste (SAL) d'adresses de transfert, les adresses de mémoire du système de séquence de programme du module (EPM) de programme de complément qui ne sont pas chargées en raison d'une capacité de mémoire manquante sont remplacées chacune par l'adresse d'une séquence (FMS) de programme du module (BPM) de programme de base produisant un signal d'erreur.

2. Procédé suivant la revendication 1, caractérisé en ce que la séquence (PLS) de chargement de programme est mise en mémoire par un système (PS2) processeur supplémentaire dans une "Mémoire Dual-Port" (DPS) de la zone de mémoire du système et en ce que, lors de l'exécution de la séquence de chargement de programme, il est produit des signaux (INT) à destination du système (PS2) processeur supplémentaire, qui font que le système (PS2) processeur supplémentaire met en mémoire dans la "Mémoire Dual-Port" (DPS) successivement des parties du programme du système, qui sont ensuite transmises par la séquence (PLS) de chargement de programme à l'adresse de la zone de mémoire du système nécessaire pour que le programme du système puisse se dérouler.

3. Procédé suivant la revendication 1 ou 2, caractérisé en ce que les systèmes (PS1, PS2) processeurs sont prévus pour commander une installation de communication et en ce que les séquences de programme du module (EPM) de programme de complément sont réalisées pour la mise en oeuvre chacun d'une facilité offerte à l'usager de l'installation de communication.
